Europäisches Patentamt

⑲ Eurcpean Patent Office    (11) Publication number: **0 049 637**

Office européen des brevets    **A1**

# (12) EUROPEAN PATENT APPLICATION

(21) Application number: **81304636.4**    (51) Int. Cl.³: **B 60 P 1/34**
                                                    **B 60 P 1/02**
(22) Date of filing: **06.10.81**

---

(30) Priority: **07.10.80 GB 8032286**

(43) Date of publication of application:
**14.04.82 Bulletin 82/15**

(84) Designated Contracting States:
**BE DE FR IT NL**

(71) Applicant: **Alfreton Engineering Limited**
**Meadow Lane Industrial Estate**
**Alfreton Derby(GB)**

(72) Inventor: **Richford, Dick c/o Alfreton Engineering**
**Limited**
**Meadow Lane Industrial Estate**
**Alfreton Derby(GB)**

(74) Representative: **Campbell, Iain Angus et al,**
**Swindell & Pearson 44 Friar Gate**
**Derby DE1 1DA(GB)**

---

(54) Implement supporting arrangement.

㊼ An agricultural implement support comprising a chassis
(10) a tow bar assembly (12, 16, 18, 26) at one end of the
chassis, means (24, 30) whereby the inclination of the chassis
with respect to a towing point of the two bar assembly is
adjustable, a wheel assembly (36, 38, 40) and means (36, 56)
whereby the position of an axle of the wheel assembly is
adjustable with respect to the chassis.

EP 0 049 637 A1

FIG. 2

Title:  Implement Supporting Arrangement

The present invention concerns an improved implement supporting arrangement.

There are known agricultural implements which are mounted on a wheel supporting arrangement or chassis, the position of the wheels relative to the chassis being movable to bring the implements from an operative ground engaging position to an inoperative transport position in which the implements are raised above ground level.

Normally these chassis are of a general rectangular configuration the width of which is equal to or less than the maximum width permitted by road traffic regulations, and at least part of the implements can be pivotably mounted thereon such that in the transport position they lie within said maximum width.

In certain instances it may be possible to mount various different implements on the chassis but in view of the configuration of the chassis and the mounting of the transport wheels the mounting facilities for the various implements and the space in which they may work is limited.

Furthermore, the load applied to the chassis by different implements mounted at different points along the length of the chassis considerably varies the load on the tow bar. To a certain extent this variable load can be accomodated by the tractor linkage but this is not often possible or desirable.

It is an object of the present invention to obviate or mitigate these disadvantages.

The invention provides therefore an implement supporting arrangement comprising a chassis, a tow bar assembly, means whereby the inclination of the chassis with respect to a towing point of the tow bar assembly is adjustable, a wheel assembly and means whereby the position of an axle of the wheel assembly with respect to the chassis is adjustable.

Preferably the tow bar assembly has a variable length whereby the distance between the towing point and the axle of the wheel assembly is adjustable.

Preferably the tow bar assembly comprises a frame pivotally attached to the chassis by link means and actuating means connected between the chassis and the frame to control the pivotal movement of said link means relative to the frame and chassis thereby controlling the length between the tow bar assembly and the inclination of the chassis with respect of the towing point. The actuating means is preferably an hydraulic piston and cylinder device.

Preferably holes may be provided in the link means, the chassis and or the frame such that the assembly is lockable in a number of positions by passing pins through corresponding holes.

Preferably the frame is an A frame and, a link is pivotally mounted to the ends of each limb of the A frame and to a cross member of the chassis.

Preferably the chassis is provided by a single longitudinally-extending member located along a central axis of the implement supporting arrangement.

The single member may be a box-section beam.

Cross members may be fixed to the beam.

A pair of axle support arms may be pivotally mounted to one of said cross members, the arms each supporting a stub axle extending on either side thereof, the stub axle carrying at least one wheel on each side of the arm.

Preferably a linkage incorporating a bell crank lever and a connecting link is connected between each arm and the chassis and actuating means are provided for pivoting the bell crank and

-3-

consequently moving the arms between upper and lower positions.

The linkage including the bell crank and connecting link is so arranged that once a predetermined angle between the axis of the connecting link and that of the arm of the bell crank to which it is connected is reached further relative rotation therebetween is prevented as that further movement of the stub axles relative

·to the chassis is impossible.

A cross bar is provided to interconnect the other arms of the bell cranks and actuating means, for example any hydraulic piston and cylinder device may be pivotally connected between said cross bar and the chassis.

An embodiment of the present invention will now be described by way of example only with reference to the accompanying drawings in which:-

Fig. 1 is a plan of an implement support arrangement;

Fig. 2 is a side elevation thereof; and

Fig 3 is an end elevation thereof.

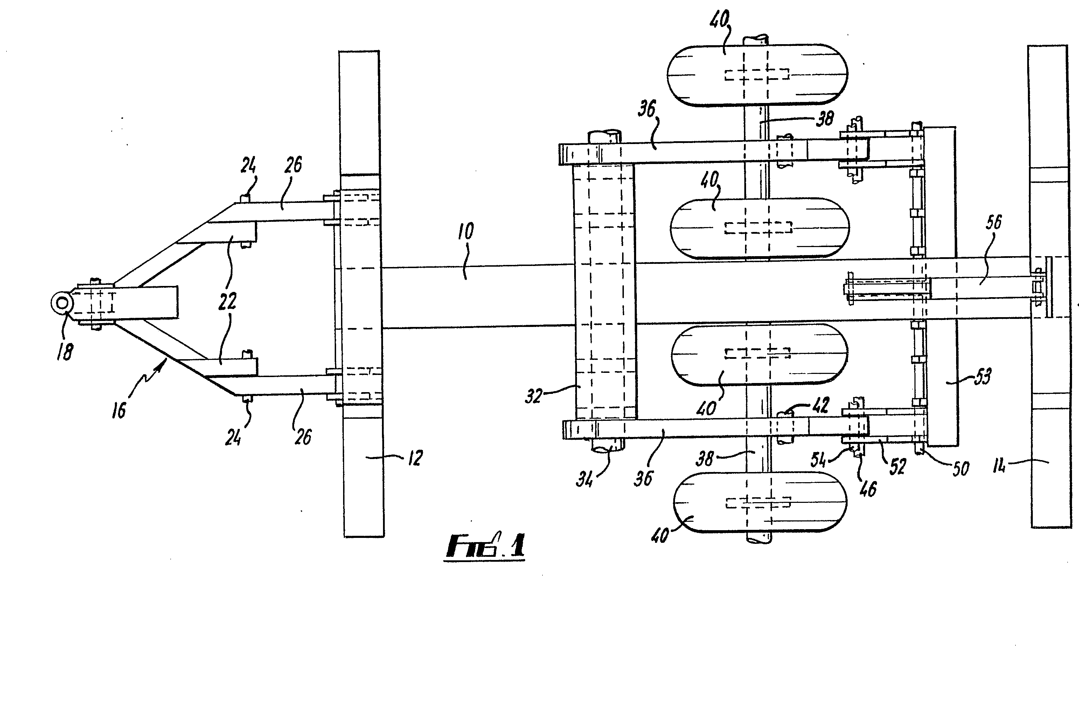

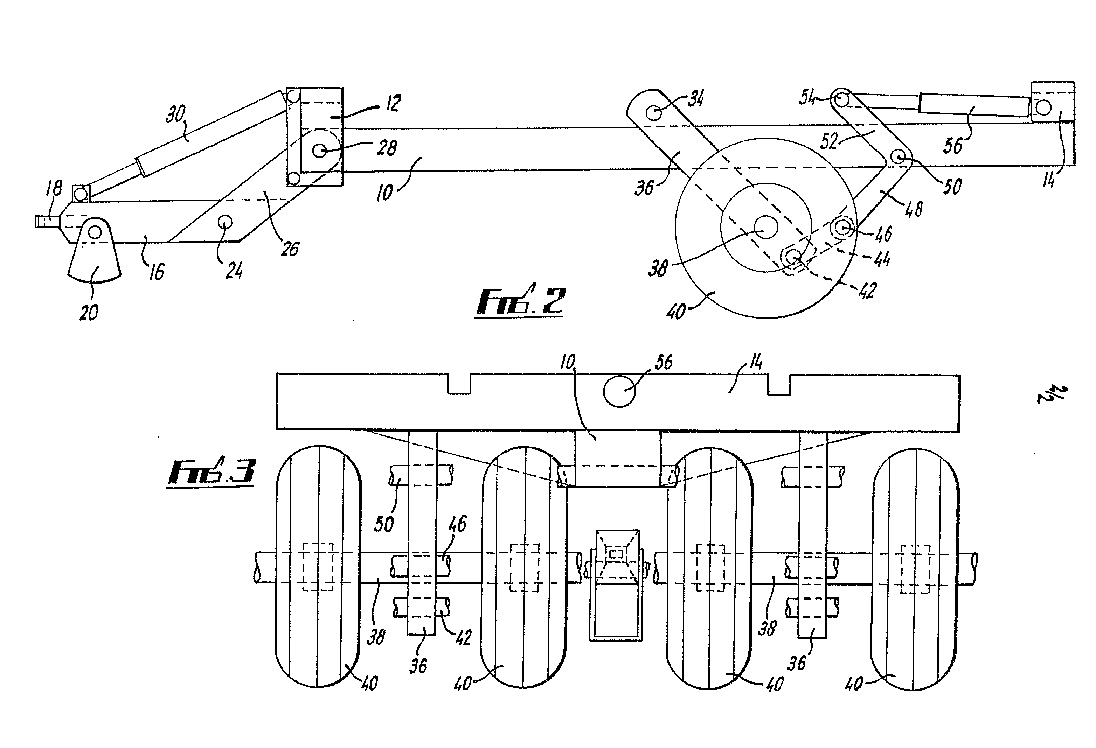

In the drawings parts have been omitted from some of the figures for clarity

An implement support arrangement or trailer comprises a main longitudinal chassis member 10 arranged centrally of the arrangement, cross members 12 and 14 being fixed to each end of the member. A tow bar assembly is attached to the front cross member 12 and comprises an A frame 16 having a towing eye 18 and a standard tow bar rest 20 at its apex, parallel members 22 fixed to the free ends of the A frame limbs, the members 22 supporting pivot pins 24 on which links 26 are pivotally mounted, the links, at their other ends, being fixedly mounted about fixings 28 carried by the cross member 12.

An hydraulic ram 30 is connected between the cross member 12 and the apex of the A frame and it will be realised that extension and contraction of the ram causes pivotal movement of
the A frame 16 about the pivot pin 24 and a corresponding movement
of the towing eye 18 to vary the inclination of the chassis member
10 with respect to the frame and the towing point. By this
means the distance between the towing eye 18 and, for example the
axle of the wheels (to be described later) attached to the main
member 10 may be varied to suit varying loads exerted on the
arrangement.

A series of holes (not shown) are provided in the links
26 and members 22 of the A frame so that pins can be passed through
corresponding holes to render the tow bar assembly immovable.

An intermediate cross member 32 is fixed to the main member
10 and carries a bar 34 on which, at either end, are pivotally
mounted support arms 36, each arm being provided near its lower
end with a stub axle 38 extending on both sides of the arm and
supporting one wheel 40 on each side of the arm. The lower end
of each arm is provided with a pivot pin 42 about which a connecting
link 44 is mounted, the connecting link in turn being pivoted
about a pin 46 provided at the end of an arm 48 of a bell crank
lever pivoted about a rod 50 supported on a further cross member
53 fixed to the main member 10. The ends of the other arms 52
of the bell cranks are pivotally mounted to a bar 54 which
extends across the arrangement and is connected to one end of
the piston of an hydraulic ram 56, the cylinder of which is
pivotally connected to the rear cross member 14 of the arrangement.
It will be realised that by extending and retracting the ram 56
each bell crank will pivot about its axis 50 and will cause pivotal
movement of the wheel arms causing a raising or lowering of
the wheels 40 relative to the main member 10.

As a safely precaution to prevent movement of the wheels
beyond a certain lowered position abutment means are provided

on the arm 48 of each bell crank so that when the axes of the pivots 50, 46 and 42 lie in a straight line further pivotal movement of the connecting links 44 relative to the arms 48 is prevented.

The cross members and the main member are adopted to support soil working implements, for example disc harrows, ploughs, rollers, and the unoccupied space beneath and to the sides of the main member facilities the mounting and operation of these implements. None of the cross members exceeds the maximum width dimension for a trailed vehicle set down by road traffic regulations and the implements may be mounted in such a way that they can be pivoted back within this dimension such that they can be transported on the public highway.

In operation the hydraulic ram 56 is connected by way of suitable connections to the towing tractor's hydraulic system and is actuated to bring the wheels 42 their lowermost transport position so that the arrangement carrying the ground working implement can be towed to the location in which it is to operate. The implement can then be moved into and fixed at its operative position and the ram 56 operated again to retract the wheels 40 so that the implements come into contact with the ground.

It may be desirable to effect a weight transference and this may be achieved by adjusting the length of the tow bar assembly utilising hydraulic ram 30 so that the distance between the centre of gravity of the arrangement and the towing eye 18 is varied. The inclination of the chassis relative to the towing point is also varied in this manner. Thus if a first implement is fitted towards the towing point end of the chassis and a second implement is fitted to the rear side of the chassis, variation of the said inclination will cause either the first or the second implement to engage the ground.

- 6 -

Also, one or more implements are preferably attachable to the chassis in one of a number of positions by co-operation of fixings on the implements with additional holes in the chassis.

Various modifications can be made without departing from the scope of the invention. The main chassis member need not be a rectangular section box girder but could, for example, be of circular section; additional cross members could be provided thereon. The hydraulic rams could be replaced by other actuating means. The arrangement of wheels on the arms could be varied and the means for lowering and raising the wheel carrying arms modified. Attachment means for a load platform or trailer could be provided on the main end cross members whereby the arrangement could be used as a load carrying trailer when the implements are not in use.

CLAIMS

/

1 An implement supporting arrangement characterised in that it comprises a chassis (10) a tow bar assembly (12,16,18,26) at one end of the chassis, means (24,30) whereby the inclination of the chassis with respect to a towing point (18) of the tow bar assembly is adjustable, a wheel assembly (36,38,40) and means whereby the position an axle (38) of the wheel assembly with respect to the chassis is adjustable.

2 An implement supporting arrangement as claimed in claim 1 characterised in that the tow bar assembly has a variable length whereby the distance between the towing point (18) and the axle (38) of the wheel assembly is adjustable.

3 An implement supporting arrangement as claimed in claim 2 characterised in that the tow bar assembly (12,16,18,26) comprises a frame (16) pivotally attached to the chassis by link means (26) and actuating means (30) connected between the chassis (10) and the frame (16) to control the pivotal movement of said link means (26) relative to the frame (16) and chassis (10) thereby controlling the length between the tow bar (18) and the chassis (10).

4 An implement supporting arrangement as claimed in claim 3 characterised in that the actuating means is preferably a hydraulic piston and cylinder device (30).

5 An implement supporting arrangement as claimed in claim 3 or 4 characterised in that holes are provided in the link means, the chassis and the frame such that the assembly is lockable in a number of positions by passing pins through corresponding holes.

6 An implement supporting arrangement as claimed in claim 3 characterised in that the frame is an A frame (16) and a link (26) is pivotally mounted to the ends of each limb of the

*2*

A frame and to a cross member (12) of the chassis.

7 An implement supporting arrangement as claimed in claim 1 in that the chassis is provided by a single longitudinally extending member (10) located along a central axis of the implement supporting arrangement.

8 An implement supporting arrangement as claimed in claim 7 characterised in that the single member is a box-section beam (10).

9 An implement supporting arrangement as claimed in claim 8 characterised in that cross members (12,32,53) may be fixed to the beam.

10 An implement supporting arrangement as claimed in claim 9 characterised in that a pair of axle support members, the arms each supporting a stub axle (38) extending on each side thereof, the stub axle carrying at least one wheel (40) on each side of the arm.

11 An implement supporting arrangement as claimed in claim 10 characterised in that a linkage incorporating a bell crank lever (52,48) and a connecting link (44) is connected between each arm (36) and the chassis and actuating means (56) are provided for pivoting the bell crank and consequently moving the arms between upper and lower positions, the linkage including the bell crank and connecting link is being arranged that once a predetermined angle between the axis of the connecting link and that of the arm of the bell crank to which it is connected is so that further movement of the wheels relative to the chassis is impossible.

12 An implement supporting arrangement as claimed in claim 11 characterised in that a cross bar (54) is provided to interconnect the other arms of the bell cranks and actuating means.

FIG. 1

Fig.2

Fig.3

# EUROPEAN SEARCH REPORT

European Patent Office

Application number

EP 81 30 4636.4

## DOCUMENTS CONSIDERED TO·BE RELEVANT

| Category | Citation of document with indication, where appropriate, of relevant passages | Relevant to claim |
|---|---|---|
| | FR - A - 2 222 244 (M. BERTONCINI) <br> * claims 1, 2; page 1, line 28 to page 2, line 26; fig. 1, 2 * | 1-4, 10 |
| | -- | |
| | US - A - 2 047 011 (H.J. DILLON) <br> * claim 1; fig. 4 * | 7,9 |
| | -- | |
| | CH - A - 366 752 (STEYR-DAIMLER-PUCH) <br> * page 1, lines 30 to 33; page 2, lines 10 to 14; fig. 3 * | 7,8 |
| | -- | |
| | GB - A - 2 040 847 (RUBERY OWEN) <br> *page 3, lines 34 to 51; fig. 8 * | 2,5,6 |
| | -- | |
| | DE - C - 917 291 (H. WOHLDORF) <br> * page 2, lines 38 to 42; fig. 1 * | 6 |
| | -- | |
| | US - A - 2 774 604 (H.A. RENDEL et al.) <br> * column 2, lines 7 to 11; column 3, lines 3 to 24; fig. 7 * | 10,11 |
| | -- | |
| A | DE - A1 - 2 754 009 (WORKUM) <br> * page 13, lines 12 to 24; fig. 8 * <br> & GB - A - 1 596 768 | 11 |
| | ---- | |

**CLASSIFICATION OF THE APPLICATION (Int Cl ³)**

B 60 P 1/34
B 60 P 1/02

**TECHNICAL FIELDS SEARCHED (Int. Cl.³)**

B 60 D 1/14
B 60 P 1/02
B 60 P 1/08
B 60 P 1/18
B 60 P 1/34
B 62 D 21/02
B 62 D 21/04

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 15-12-1981 | BERGZOLL |

EPO Form 1503.1  05.78